## Europäisches Patentamt
## European Patent Office
## Office européen des brevets

(19)

(11) Veröffentlichungsnummer: **0 046 989**
**B1**

(12) # EUROPÄISCHE PATENTSCHRIFT

(45) Veröffentlichungstag der Patentschrift:
18.12.85

(51) Int. Cl.⁴: **G 01 N 27/12**

(21) Anmeldenummer: 81106679.4

(22) Anmeldetag: 27.08.81

(54) Selektiver Dünnschicht-Gassensor hoher Empfindlichkeit und Stabilität zum Nachweis und zur Messung von gasförmigen Kohlenwasserstoff-Verunreinigungen in der Luft auf der Basis von Wolframoxid (WOx)-Halbleitern, sowie ein Verfahren zu seiner Herstellung.

(30) Priorität: 28.08.80 DE 3032476

(43) Veröffentlichungstag der Anmeldung:
10.03.82 Patentblatt 82/10

(45) Bekanntmachung des Hinweises auf die Patenterteilung:
18.12.85 Patentblatt 85/51

(84) Benannte Vertragsstaaten:
FR GB

(56) Entgegenhaltungen:
DE - A - 2 651 160
DE - A - 2 656 895
FR - A - 2 087 004
GB - A - 2 003 273
GB - A - 2 029 583
US - A - 3 479 257
US - A - 4 030 340
US - A - 4 169 369
US - A - 4 197 089

APPLIED PHYSICS LETTERS, Band 11, Nr. 8, Oktober 1967, Seiten 255-257, New-York, NY, USA. P.J. SHAVER: "Activated Tungsten Oxide Gas Detectors"
Russian J., Phys. chem., 42 (1968) 11, S. 1476-1479
Appl. Phys., 13, (1977), S. 231.237

(73) Patentinhaber: **Siemens Aktiengesellschaft, Berlin und München Wittelsbacherplatz 2, D-8000 München 2 (DE)**

(72) Erfinder: **Treitinger, Ludwig, Dr., Klobensteiner Strasse 25, D-8000 München 90 (DE)**
Erfinder: **Voit, Helmut, Blumenstrasse 5a, D-8400 Regensburg (DE)**

(56) Entgegenhaltungen: (Fortsetzung)
**Die Akte enthält technische Angaben, die nach dem Eingang der Anmeldung eingereicht wurden und die nicht in dieser Patentschrift enthalten sind.**

# Beschreibung

Die vorliegende Patentanmeldung betrifft einen selektiven Dünnschicht-Gassensor hoher Empfindlichkeit und Stabilität zum Nachweis und zur Messung von gasförmigen Kohlenwasserstoff-Verunreinigungen in der Luft auf der Basis von Wolframoxidhalbleitern auf Substraten aus Quarzglas, oxidiertem Silizium oder Keramik, bei dem der elektrische Widerstand der Wolframoxidschicht von der Art und Konzentration des zu detektierenden Gases abhängt und ein Verfahren zum Herstellen eines solchen Sensors gemäss dem Oberbegriff des Anspruchs 6.

Gassensoren werden für viele verschiedene Aufgaben benötigt, z.B. Einhaltung von MAK-Werten (= maximale Arbeitskonzentration nach DIN), Explosionsschutz, Emissionsschutz, medizinisch-biologische Anwendungen, Lecksuche usw.

Voraussetzung für den Einsatz eines Halbleiters als Gassensor ist eine ausreichend grosse elektrische Leitwert- oder Kapazitätsänderung bei Berührung mit dem jeweiligen Messgas. Der Maximalwert der Änderung soll innerhalb kurzer Zeit, möglichst innerhalb von einigen Sekunden, erreicht werden. Bei Entfernung des Messgases muss der Ausgangswert sich nach kurzer Zeit, möglichst nach einigen Sekunden, wieder einstellen. Sowohl die Empfindlichkeit des Sensors, das heisst, die Änderung je Messgaseinheit, als auch die Werte von Anstiegs- und Regenerationszeit sollen über einen längeren Zeitraum erhalten bleiben.

Auf dem Markt erhältlich sind derzeit Bauelemente in Form von Sinterpillen oder gesinterte Halbleiterdickschichten auf Keramikröhrchen, die mit Drahtwendeln beheizt werden. Die Halbleiterkörper bestehen zumeist aus Zinnoxid ($SnO_2$) sowie Eisenoxid ($\gamma-Fe_2O_3$) mit diversen Beimengungen.

Ebene Dünnschichtanordnungen haben gegenüber den eben genannten Bauformen mehrere Vorteile: sie können mittels einer gut bekannten und kontrollierbaren Technologie hergestellt werden. Damit verbunden sind neben weitgehender Reduktion von manuellen Arbeitsschritten auch gute Reproduzierbarkeit durch die Scheibentechnik, einfaches Design und leichte Miniaturisierbarkeit, wie auch die Möglichkeit, solche Sensoren zusammen mit den Ansteuer- und Auswerteschaltkreisen auf das selbe Substrat zu setzen. Aus diesen Gründen werden als Unterlagen oxidierte Silizium-Scheiben mit einer $SiO_2$-Schicht von z.B. 1 μm Dicke verwendet.

Ein Dünnschicht-Gassensor der eingangs genannten Art auf der Basis von Wolframoxid ($WO_3$) ist aus den deutschen Offenlegungsschriften 2 651 160 und 2 656 895 aus FR-A-2 087 004 und US-A-3 479 257 bekannt. Dabei lösen reduzierende Gase bei Berührung mit der Oberfläche des aus $WO_3$ bestehenden Halbleiters eine Änderung des elektrischen Widerstandswertes aus. Eine Beschreibung der Abhängigkeit der elektrischen Leitfähigkeit von der umgebenden Gasatmosphäre für $WO_3$-Dünnschichten ist aus einem Aufsatz von V. N. Kotelkov und I. A. Myasnikov aus dem Russian Journal of Physical Chemistry 42 (11) 1968 auf den Seiten 1476 bis 1479 sowie aus einem Aufsatz von P. J. Shaver in den Appl. Phys. Lett. 11, No. 8, 1967, auf den Seiten 255–257 zu entnehmen.

Ein Verfahren zum Herstellen eines Sensors gemäss dem Oberbegriff des Anspruchs 6 ist aus US-A-4 169 369 bekanntgeworden.

In dem ersten Aufsatz wird die Sauerstoff-Abhängigkeit des elektrischen Leitwerts aufgedampfter $WO_3$-Schichten mit gesputterten Platin-Kontakten beschrieben. In der Zusammenfassung der Ergebnisse wird zwar eine hohe Empfindlichkeit der $WO_3$-Schichten auf den Sauerstoff-Gehalt der Umgebung konstatiert, doch wird festgestellt, dass die Schichten als Sensoren wegen ihrer Trägheit nicht geeignet sind.

In dem zweiten Aufsatz wird metallisches Wolfram auf Quarzgläser aufgedampft, anschliessend oxidiert und dann mit Platin aktiviert. Dieser Aufsatz enthält Messwerte über die Abhängigkeit des Flächenwiderstandes $R_\square$ vom Wasserstoff-Gehalt in Inertgas, sowie den zeitlichen Verlauf der Änderung für 0,1% Wasserstoff in Luft, wobei die Anstiegszeit etwa 1 Sekunde beträgt. Für die Regeneration des Ausgangswertes wird bei wasserdampfhaltiger Atmosphäre etwa ebensoviel Zeit benötigt wie die Anstiegszeit beträgt. Bei trockener Atmosphäre werden mehr als 10 Minuten als Regenerationszeit angegeben. Werte von Proben ohne Platin-Aktivierung sind hier nicht vorhanden.

Aus einem Aufsatz von H. R. Zeller und H. U. Beyeler aus Appl. Phys. 13, (1977) auf den Seiten 231–237 ist bekannt, dass die Eigenschaften von $WO_3$-Schichten äusserst stark von der Herstellung abhängen.

Die Erfindung macht sich diese Erkenntnis zunutze zur Lösung der Aufgabe, einen für gasförmige Kohlenwasserstoffe in Luft selektiven Dünnschicht-Gassensor auf der Basis von Wolframoxid-Halbleitern zu schaffen, der neben einer hohen Empfindlichkeit und Stabilität eine zuverlässige und schnelle Anzeige (innerhalb einiger Sekunden) und Registrierung erlaubt.

Diese Aufgabe wird durch einen Gassensor der eingangs genannten Art gelöst, welcher erfindungsgemäss dadurch gekennzeichnet ist, dass der Wolframoxidhalbleiter aus einer gesputterten $WO_{3-\delta}$-Dünnschicht besteht, wobei $0 < \delta < 0,2$ ist.

Es ist besonders günstig, wenn die $WO_{3-\delta}$-Dünnschicht durch ein Edelmetall oder ein Metalloxid aktiviert ist, wobei die Aktivatorschicht keine grösseren zusammenhängenden Bereiche der Oberfläche bedeckt, den Gesamtleitwert nicht beeinflusst und keine direkte Verbindung mit den Messkontakten hat. Vorzugsweise besteht das Edelmetall aus Platin. Die Verwendung von Gold, Palladium oder Gold/Palladium ist ebenfalls möglich.

Gemäss einem besonders günstigen Ausführungsbeispiel nach der Lehre der Erfindung besteht das Substrat des Gassensors aus einem oxidierten Siliziumkörper, der an seiner, der Sensor-Dünnschicht abgewandten Oberfläche eine bis zur Entartung hochdotierte Oberflächenzone aufweist, die zur direkten Beheizung mit Metallkontakten versehen ist.

Der selektive $WO_{3-\delta}$-Dünnschicht-Gassensor wird erfindungsgemäss nach dem Verfahren gemäss Anspruch 6 hergestellt.

Die $WO_{3-\delta}$-Dünnschicht, deren Dicke vorzugsweise in einem Bereich von 100 bis 1000 nm liegt, wird auf dem, vorzugsweise aus oxidiertem Silizium bestehenden Substrat durch reaktives HF-Sputtern von einem metallischen Wolfram-Target in einer Inertgasatmosphäre mit einem Sauerstoffanteil von 1 bis 10%, vorzugsweise aus Argon und 3% Sauerstoffanteil bei einem Gesamtdruck von $1,3 \times 10^{-2}$ mbar hergestellt. Dabei ist es zweckmässig, die Gase in vorgemischter Form der Sputteranlage zuzuführen. Die entstehenden Schichten haften sehr gut auf den aus Quarzglas, oxidiertem Silizium oder Keramik bestehenden Substraten und sind je nach der Temperatur des Substrats während der Herstellung kristallin oder amorph. Durch thermische Nachbehandlung in Luft mit 0,1% Propangehalt können diese amorphen Schichten bei 600 °C in gut kristalline Schichten mit Kristallitgrössen in der Grössenordnung der Schichtdicke umgewandelt werden.

Die Aktivierungssubstanz, welche bevorzugt aus Platin besteht, kann entweder gleichzeitig mit der $WO_{3-\delta}$-Schicht aufgesputtert werden, oder auch in einer nicht zusammenhängenden Schicht in einer Schichtstärke von z.B. 5 nm zusätzlich aufgebracht werden.

Die Schichten werden mittels Sputtern oder Aufdampfen mit Kontaktstreifen versehen. Als Kontaktmaterialien werden Platin, Palladium, Gold, Gold-Palladium und Aluminium (aufgedampft) verwendet. Die Haftung dieser Materialien in der Dicke von 50 nm bis 100 nm ist sehr gut auf den $WO_{3-\delta}$-Dünnschichten.

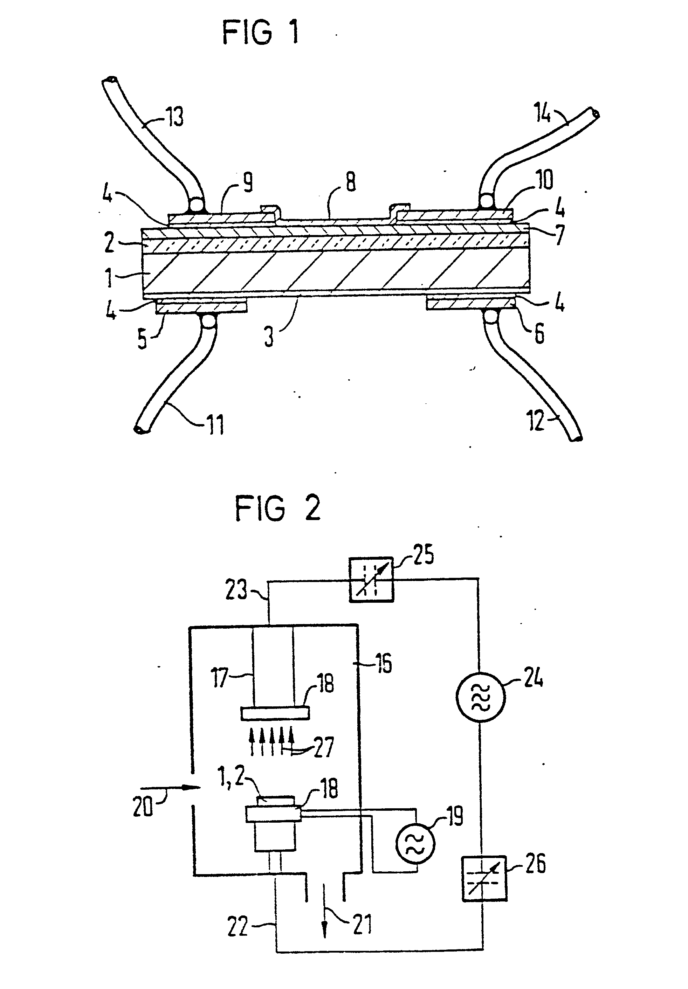

Weitere Einzelheiten sind nachfolgend anhand eines Ausführungsbeispiels und der Figuren 1 bis 3 zu entnehmen. Dabei zeigt

die Figur 1 im Schnittbild einen Dünnschicht-Gassensor auf der Basis $WO_{3-\delta}$ nach der Erfindung,

die Figur 2 schematisch eine Sputteranlage zur Herstellung der $WO_{3-\delta}$-Dünnschicht und

die Figur 3 im logarithmischen Massstab die Abhängigkeit der Leitfähigkeit I (Ampere) von der Frequenz f (Hz) einer 650 nm dicken $WO_{3-\delta}$-Schicht mit U = 1 V, T = 25 °C.

Figur 1:

Auf ein vorzugsweise einkristallines Siliziumsubstrat 1, welches bis auf seine Unterseite allseitig mit einer $SiO_2$-Isolierschicht 2 von 1 µm Dicke versehen ist, ist an der Oberfläche der Unterseite durch Eindiffundieren von Dotierstoffatomen oder durch Ionenimplantation, z.B. von Phosphor oder Bor, eine als Heizschicht wirkende hochdotierte $n^+$- oder $p^+$-Zone 3 erzeugt, die an beiden Seiten unter Zwischenschalten einer aus Chrom oder Chromnickel bestehenden Haftschicht 4 mit aufgedampften oder aufgesputterten Kontaktmetallstreifen 5 und 6 aus Platin versehen wird. Auf das mit der Oxidschicht 2 versehene Siliziumsubstrat 1 wird dann auf der anderen Seite (Oberseite) durch HF-Sputtern eine aus Wolframoxid der Zusammensetzung $WO_{3-\delta}$ – wobei $\delta < 0,2$ ist – bestehende Metalloxid Halbleiterschicht 7 aufgebracht, die als Sensorschicht zum Nachweis von gasförmigen Kohlenwasserstoffen in Luft dient. Auf diese Schicht 7, die vorzugsweise 500 nm dick ist, wird eine Aktivierungsschicht 8 aus Platin aufgebracht. Dies kann auch durch Sputtern erfolgen. Auf die Sensorschicht 7 werden ebenfalls zwei Kontaktmetallstreifen 9 und 10 aus Platin aufgedampft. Die Anschlussdrähte 11 und 12 für die Heizschicht und die Anschlussdrähte 13 und 14 für den Sensor weisen vorzugsweise einen Durchmesser von 25 bis 100 µm auf und können aus Platin, Gold, Aluminium oder Nickel bestehen.

Figur 2:

Für die Herstellung der Wolframoxidschicht ($WO_{3-\delta}$) wird eine Sputteranlage benutzt, welche aus einem evakuierbaren Rezipienten 16 besteht, in dem sich auf einem Halter 17 das Sputtertarget 18, in diesem Fall ein metallisches Wolframtarget, befindet. Weiterhin befindet sich im Rezipienten 16 ein Substrathalter 18, welcher mittels einer Stromquelle 19 beheizt werden kann. Auf diesen Substrathalter 18 wird das aus der $SiO_2$-Schicht 2 bestehende Substrat 1 gebracht. Über einen Pumpanschluss 21 wird der Rezipient 16 vor der Beschichtung zunächst evakuiert und dann über einen Gaseinlass 20 mit einem Argon-Sauerstoffgemisch gefüllt, wobei ein Gesamtdruck von $1,3 \times 10^{-2}$ mbar eingestellt wird. Über Stromzuführungen 22 und 23 sind der Substrathalter 18 und der Targethalter 17 mit einer HF-Hochspannungsquelle 24 verbunden. Die Anpassung der Elektroden an den Generator erfolgt über die Anpassnetzwerke 25 und 26. Zum Bestäuben wird nun die Hochfrequenzhochspannungsquelle 24 an den Substrathalter 18 und den Targethalter 17 gelegt und eine Vorspannung im Bereich von −30 V bis −2000 V, vorzugsweise 500 V, angelegt. Es entsteht dabei eine Gasentladung, bei der der grösste Teil der positiven Ionen 27 auf die Oberfläche des Targets 18 auftreffen und von dort Material abtragen. Das abgetragene Material schlägt sich auf der gegenüberliegenden Oberfläche des Substrats (1, 2) nieder in einer Schicht bestehend aus einer homogenen amorphen Verbindung von $WO_{3-\delta}$ wobei $\delta < 0,2$ ist.

Die beschichteten Siliziumscheiben werden dann in die entsprechenden Anordnungen zerteilt und einer Nachbehandlung, z.B. Tempern in verschiedenen Atmosphären z.B. synthetischer Luft oder Sauerstoff mit verschiedenen Zusätzen (Feuchtigkeit, Kohlenwasserstoffe), unterworfen.

Danach werden die Kontakte (5, 6, 9 und 10) aus Platin aufgesputtert und im Anschluss daran die Aktivatorschicht 8. Das Sensorelement wird noch einer künstlichen Alterung in Luft mit 0,1% Propangehalt bei 600 °C 100 Stunden lang unterworfen. Dadurch wird die Empfindlichkeit der Schichten auf einen Wert von $^s I_{I_0} \approx 400$ stabilisiert.

**Figur 3:**

Es wurde festgestellt, dass der elektrische Leitwert, gemessen an den beiden Metallkontaktstreifen mit einer Spannung von 1 Volt bei verschiedenen Frequenzen zwischen 0 und 100 kHz nicht von der Dicke der Schichten abhängt. Daraus ist zu sehen, dass es sich um eine reine Oberflächenleitfähigkeit handelt. Das Schichtvolumen liefert keinen ersichtlichen Beitrag. Da der für die Detektion eines Gases massgebliche Effekt ebenfalls an der Oberfläche bzw. in der Randschicht abläuft, ist diese Eigenschaft der $WO_{3-\delta}$-Schichten für den Betrieb als Gasdetektor sehr vorteilhaft.

Die Strom-Spannungs-Kennlinien sind in dem verwendeten Bereich streng linear, erst über 500 Volt tritt schwache Nichtlinearität auf.

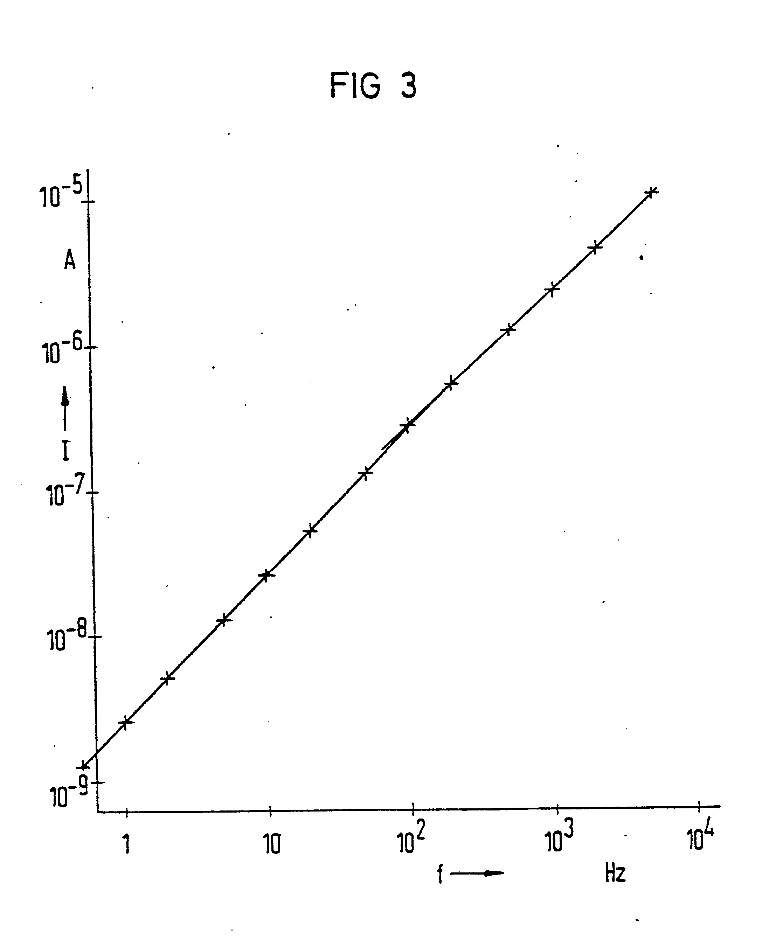

Ein weiterer Vorteil ist die starke Fehlordnung der Oberfläche, die damit eine grosse Anzahl von «aktiven» Plätzen für die Wechselwirkung mit der umgebenden Atmosphäre bietet. Als aktive Plätze kommen vornehmlich Oberflächen-Sauerstoff-Leerstellen in Frage. Die Fehlordnung der Oberfläche kommt deutlich in der Wechselstrom-Leitfähigkeit, wie aus Figur 3 ersichtlich, zum Ausdruck, die charakteristisch für amorphe Halbleiter ist. Da diese Frequenzabhängigkeit des Leitwerts unabhängig vom Kontaktmaterial bei verschiedenster Elektronen-Austrittsarbeit ist, kann es sich nicht um eine Eigenschaft des jeweiligen Metallhalbleiterübergangs handeln.

Wie die Messungen ohne Metallkontaktstreifen gezeigt haben, sind solche $WO_{3-\delta}$-Schichten auch ohne jegliche «Aktivierung» z.B. gegenüber Propan empfindlich. Die relative Leitwertsänderung ist für 1% Propan bei 500 °C etwa 30, die Anstiegszeit etwa 74 s, die Regenerationszeit etwa 36 s. Die Verwendung von katalytisch passiven Metallstreifen-Kontakten, wie z.B. aus Aluminium, ändert nicht viel an diesen Werten. Es werden relative Leitwerts-Änderungen $^{sl}/_{I_o}$ von 10, Anstiegszeiten von 9 s und Regenerationszeiten von 75 s erhalten. Wird statt des katalytisch passiven Kontaktmaterials Aluminium ein aktives Material wie Platin gewählt, so wird die Empfindlichkeit grösser (unter Empfindlichkeit wird in diesem Fall die

$$\text{relative Leitwertsänderung } \frac{sG}{GO} = \frac{sI}{I_o}$$

je 1% Propan in Luft verstanden); die Anstiegs- und Regenerationszeiten werden kürzer. Es werden Anstiegszeiten von 7,5 s und Regenerationszeiten von 12,5 s gemessen.

Wird die Sensorschicht zusätzlich aktiviert, das heisst, eine für das jeweilige Messgas reaktionsbeschleunigende Substanz entweder bei der Schichtherstellung beigegeben oder nachher aufgebracht, so können noch grössere Empfindlichkeiten (Faktor 10) und/oder kürzere Anstiegs- und Regenerationszeiten gemessen werden.

## Patentansprüche

1. Selektiver Dünnschicht-Gassensor hoher Empfindlichkeit und Stabilität zum Nachweis und zur Messung von gasförmigen Kohlenwasserstoff-Verunreinigungen in der Luft auf der Basis von Wolframoxidhalbleitern auf Substraten aus Quarzglas, oxidiertem Silizium oder Keramik, bei dem der elektrische Widerstand der Wolframoxidschicht von der Art und Konzentration des zu detektierenden Gases abhängt, dadurch gekennzeichnet, dass der Wolframoxidhalbleiter aus einer gesputterten $WO_{3-\delta}$-Dünnschicht besteht, wobei $0 < \delta < 0,2$ ist.

2. Selektiver Dünnschicht-Gassensor nach Anspruch 1, dadurch gekennzeichnet, dass die $WO_{3-\delta}$-Dünnschicht durch ein Edelmetall oder ein Metalloxid aktiviert ist, wobei die Aktivatorschicht keine grösseren zusammenhängenden Bereiche der Oberfläche bedeckt, den Gesamtleitwert nicht beeinflusst und keine direkte Verbindung mit den Messkontakten hat.

3. Selektiver Dünnschicht-Gassensor nach Anspruch 2, dadurch gekennzeichnet, dass das Edelmetall aus Platin besteht.

4. Selektiver Dünnschicht-Gassensor nach Anspruch 1 bis 3, dadurch gekennzeichnet, dass das Substrat aus einem oxidierten Siliziumkörper besteht, der an seiner der Sensor-Dünnschicht abgewandten Oberfläche eine bis zur Entartung hochdotierte Oberflächenzone aufweist, die zur direkten Beheizung mit Metallkontakten versehen ist.

5. Selektiver Dünnschicht-Gassensor nach Anspruch 1 bis 4, dadurch gekennzeichnet, dass die Schichtdicke der $WO_{3-\delta}$-Schicht im Bereich von 50 bis 5000 nm, vorzugsweise im Bereich von 100 bis 1000 nm liegt.

6. Verfahren zum Herstellen eines selektiven Dünnschicht-Gassensors auf der Basis eines Metalloxidhalbleiters, bei dem die Metalloxid-Dünnschicht auf dem Substrat durch reaktives HF-Sputtern vom Metall-Target in einer Inertgas-Sauerstoff-Niederdruckatmosphäre hergestellt wird, dadurch gekennzeichnet, dass zur Herstellung der $WO_{3-\delta}$-Dünnschicht des Gassensors nach Anspruch 1 bis 5 ein Wolfram-Target und eine Inertgasatmosphäre mit einem Anteil an Sauerstoff von 1 bis 10% verwendet wird.

7. Verfahren nach Anspruch 6, dadurch gekennzeichnet, dass bei einem Sauerstoffgehalt von 3% in einer aus Argon bestehenden Sputteratmosphäre ein Gesamtdruck von $1,3 \times 10^{-2}$ mbar eingestellt wird.

8. Verfahren nach Anspruch 6 und 7, dadurch gekennzeichnet, dass das Sputtergas in vorgemischter Form verwendet wird.

9. Verfahren nach Anspruch 6 bis 8, dadurch gekennzeichnet, dass die Aktivierungssubstanz, vorzugsweise aus Platin bestehend, gleichzeitig mit der $WO_{3-\delta}$-Schicht aufgesputtert wird.

10. Verfahren nach Anspruch 6 bis 8, dadurch gekennzeichnet, dass die Aktivierungssubstanz, vorzugsweise aus Platin bestehend, in einer nichtzusammenhängenden Schicht in einer Schichtstärke von 5 nm zusätzlich aufgebracht wird.

11. Verfahren nach Anspruch 6 bis 10, dadurch gekennzeichnet, dass die mit oder ohne Aktivierungssubstanz versehene $WO_{3-\delta}$-Dünnschicht auf

dem oxidierten Siliziumsubstrat einer thermischen Alterung in Luft mit 0,1% Propangehalt bei 600 °C mindestens 1 Stunde unterzogen wird.

## Claims

1. A selective thin-layer gas sensor of high sensitivity and stability for detecting and measuring gaseous hydrocarbon impurities in the air on having a basis of tungsten oxide semiconductors on substrates made of quartz glass, oxidized silicon, or ceramic, wherein the electrical resistance of the tungsten oxide layer depends on the type and concentration of the gas to be detected, characterised in that the tungsten oxide semiconductor consists of a sputtered $WO_{3-\delta}$-thin layer, where $0 < \delta < 0.2$.

2. A selective thin-layer gas sensor as claimed in Claim 1, characterised in that the $WO_{3-\delta}$-thin layer is activated by a noble metal or a metal oxide, where the activator layer does not cover any large continuous areas of the surface, does not influence the total conductance and does not have any direct connection to the measuring contacts.

3. A selective thin-layer gas sensor as claimed in Claim 2, characterised in that the noble metall is platinum.

4. A selective thin-layer gas sensor as claimed in Claim 1 to 3, characterised in that the substrate consists of an oxidized silicon body which, on its surface facing away from the sensor thin-layer has a surface region which is highly doped to degeneracy and which is provided with metal contacts for direct heating.

5. A selective thin-layer gas sensor as claimed in Claim 1 to 4, characterised in that the thickness of the $WO_{3-\delta}$-layer is in the range of 50 to 5000 nm, preferably in the range of 100 to 1000 nm.

6. A process for the production of a selective thin-layer gas sensor having a basis of a metal oxide semiconductor, wherein the metal oxide thin-layer on the substrate is produced by reactive HF-sputtering of the metal target in an inert gas-oxygen atmosphere at low pressure, characterised in that, in order to produce the $WO_{3-\delta}$-thin layer of the gas sensor as claimed in Claim 1 to 5, a tungsten target and an inert gas atmosphere having an oxygen content of 1 to 10% are used.

7. A process as claimed in Claim 6, characterised in that for an oxygen content of 3% in a sputtering atmosphere which consists of argon, a total pressure of $1.3 \times 10^{-2}$ mbar is set.

8. A process as claimed in Claim 6 and 7, characterised in that the sputtering gas is used in a pre-mixed form.

9. A process as claimed in Claim 6 to 8, characterised in that the activating material, which preferably consists of platinum, is simultaneously sputtered with the $WO_{3-\delta}$-layer.

10. A process as claimed in Claim 6 to 8, characterised in that the activating material, which preferably consists of platinum, is additionally applied in a non-continuous layer in a thickness of 5 nm.

11. A process as claimed in Claim 6 to 10, characterised in that the $WO_{3-\delta}$-thin layer, provided or not with an activating material, on the oxidized silicon substrate, is subjected to thermal ageing in air having a propane content of 0.1% at 600 °C for at least one hour.

## Revendications

1. Détecteur de gaz sélectif et à couche mince, possédant une haute sensibilité et une forte stabilité, pour détecter la présence et pour mesurer des impuretés gazeuses d'hydrocarbures dans l'air, sur la base de semi-conducteurs à l'oxyde de tungstène sur des substrats en verre quartzeux, en silicium oxydé ou en céramique, dans lequel la résistance électrique de la couche d'oxyde de tungstène dépend du genre et de la concentration du gaz dont la présence est à détecter, caractérisé par le fait que le semi-conducteur en oxyde de tungstène est constitué par une mince couche de $WO_{3-\delta}$ déposée par pulvérisation cathodique, $\delta$ satisfaisant la relation $0 < \delta < 0,2$.

2. Détecteur de gaz sélectif et à couche mince selon la revendication 1, caractérisé par le fait que la couche mince de $WO_{3-\delta}$ est activée à l'aide d'un métal noble ou d'un oxyde métallique, la couche de la substance servant à l'activation ne couvrant pas des zones importantes et d'un seul tenant de la surface, n'influençant pas la conductibilité totale et ne possédant pas de liaison directe avec les contacts de mesure.

3. Détecteur de gaz sélectif et à couche mince selon la revendication 2, caractérisé par le fait que le métal noble est constitué par du platine.

4. Détecteur de gaz sélectif et à couche mince selon la revendication 1 à 3, caractérisé par le fait que le substrat est constitué par un corps de silicium oxydé qui présente, sur sa surface éloignée de la couche mince du détecteur, une zone superficielle fortement dopée, jusqu'à la dégénérescence, et pourvue de contacts métalliques pour le chauffage direct.

5. Détecteur de gaz sélectif et à couche mince selon la revendication 1 à 4, caractérisé par le fait que l'épaisseur de la couche de $WO_{3-\delta}$ se situe dans la plage de 50 à 5000 nm, de préférence dans la plage de 100 à 1000 nm.

6. Procédé pour la fabrication d'un détecteur de gaz sélectif et à couche mince sur la base d'un semi-conducteur à oxyde métallique, dans lequel la couche mince de l'oxyde métallique est réalisée sur le substrat par une pulvérisation cathodique réactive de haute fréquence de la cible métallique dans une atmosphère basse pression à gaz inerte et à oxygène, caractérisé par le fait que pour la réalisation de la couche mince de $WO_{3-\delta}$ du détecteur de gaz selon les revendications 1 à 5, on met en œuvre une cible de tungstène et une atmosphère de gaz inerte avec une teneur en oxygène de 1 à 10%.

7. Procédé sur la revendication 6, caractérisé par le fait que pour une teneur en oxygène de 3% dans une atmosphère de pulvérisation cathodique constituée par de l'argon, on règle la pression totale de $1,3 \times 10^{-2}$ mbar.

8. Procédé selon la revendication 6 et 7, caractérisé par le fait que le gaz de pulvérisation cathodique est utilisé sous forme prémélangée.

9. Procédé selon la revendication 6 à 8, caractérisé par le fait que la substance servant à l'activation, constituée de préférence par du platine, est déposée en même temps qu'est effectué le dépôt par pulvérisation cathodique de la couche de $WO_{3-\delta}$.

10. Procédé selon la revendication 6 à 8, caractérisé par le fait que la substance servant à l'activation, constituée de préférence par du platine, est déposée, en plus, suivant une couche qui n'est pas d'un seul tenant et qui a une épaisseur de 5 nm.

11. Procédé selon la revendication 6 à 10, caractérisé par le fait que la couche mince de $WO_{3-\delta}$ qui est pourvue de la substance servant à l'activation ou qui en est dépourvue, et qu'est déposé sur le substrat de silicium oxydé, est soumise à un vieillissement thermique dans l'air, avec une teneur en propane de 0,1%, à 600°C, pendant au moins une heure.

# FIG 1

# FIG 2

# FIG 3